# EUROPEAN PATENT APPLICATION

(11) **EP 3 961 117 A1**
(43) Date of publication of application: **02.03.2022**
(21) Application number: 21194005.1
(22) Date of filing: 31.08.2021
(51) Int. Cl.: F24F 11/00, F24F 11/64, F24F 11/89, F24F 110/10, F24F 110/12, F24F 110/20, F24F 110/22, F24F 5/00, E04B 1/70, F24F 3/14, F24F 7/013

(54) **APPARATUS, METHOD AND COMPUTER PROGRAM PRODUCT FOR CONTROLLING INDOOR CONDITIONS**

(30) Priority: 01.09.2020 FI 20205849
(71) Applicant: MoistMaster Oy, 33610 Tampere (FI)
(72) Inventor: Vinha, Juha, 33610 Tampere (FI); Heljo, Juhani, 33710 Tampere (FI)
(74) Representative: Papula Oy

(57) **Abstract**

An apparatus, method and computer program product for controlling conditions in the indoor space of a built-up shell. The apparatus (A) is configured to sense indoor temperature (T_{IN}) and relative humidity (RH_{IN}) in an inner space (IS) limited by an envelope (BE). The apparatus comprises a control unit (CU) by means of which at least one humidity decreasing device (HDD) is controlled for decreasing level of relative humidity in the inner space. The control unit comprises data on indoor relative humidity limit values at different indoor temperatures and compares the sensed values to the limit values (RH_{Limit}). The limit values include data for preventing two or more indoor damaging phenomena. Control signals are generated on the basis of the comparison between the sensed values and limit values.

## Description

### Background of the invention

The invention relates to an apparatus configured to control indoor conditions of a built-up shell in order to prevent damages related to high indoor relative humidity level.

The invention further relates to a method and computer program product for controlling indoor conditions.

The field of the invention is defined more specifically in the preambles of the independent claims.

Unsuitable combinations of temperature and relative humidity are risks for microbial growing, moisture condensation and other phenomena possibly causing damages to surfaces located indoor. Risks for damages are increased inside of built-up shell, which are used only temporarily, or heating and ventilation are not set to the level for a typical use. Some arrangements have been designed for the incompletely heated built-up shells. In typical solutions indoor temperature is set to a constant level below a typical operating level. However, these solutions have shown to be inadequate to protect surfaces limiting the indoor space and surfaces of properties located indoor in all cases. Further, energy consumption of the known solutions is often too high.

### Brief description of the invention

An object of the invention is to provide a novel and improved apparatus, method and computer program for controlling indoor conditions of an incompletely heated built-up shell.

The apparatus according to the invention is characterized by the characterizing features of the first independent apparatus claim.

The method according to the invention is characterized by the characterizing features of the independent method claim.

The computer program product according to the invention is characterized by the characterizing features of the second independent apparatus claim.

An idea of the disclosed solution is that an apparatus is provided for controlling conditions of an incompletely heated built-up shell, which comprises an indoor space limited by an envelope. The apparatus comprises one or more indoor temperature sensors for sensing indoor temperature and one or more indoor humidity sensors for sensing indoor relative humidity inside the built-up shell. The apparatus further comprises one or more control units provided with processors and computer programs executable in the processors. The control unit receives sensing or measuring data from the mentioned sensors and generates control commands for one or more humidity decreasing devices for decreasing level of the relative humidity in the indoor space. Humidity decreasing device can be either a heating device or a ventilating device or consist of both. Further, the control unit comprises data on indoor relative humidity limit values RH_{Limit} which change as a function of the indoor temperature. The mentioned indoor relative humidity limit values RH_{Limit} are based on conditions being favourable for causing damages to surface of objects in the indoor space due to at least two of the following damaging phenomena: microbial growth, moisture condensation, corrosion. The control unit compares the sensed indoor relative humidity values to the indoor relative humidity limit values RH_{Limit} at the sensed indoor temperature. The control unit controls operations of the humidity decreasing device in response to detected fast approach or exceed of the indoor relative humidity limit values RH_{Limit} in order to decrease the indoor relative humidity.

An advantage of the disclosed solution is that indoor conditions can be monitored in regard several damaging phenomena and at different relative humidity levels and temperatures. This way a comprehensive control system is provided. Further, when risks for adverse phenomena caused by too high level of indoor relative humidity can be effectively decreased, then extensive and expensive repair can be avoided, and further, health problems caused by microbes can be avoided.

A further advantage of the disclosed solution is that the apparatus is inexpensive and easy to mount and use. There is no need to make any modifications to the built-up shell and its systems and installations. However, solution can also be integrated to heating or automation system of built-up shell.

Since the disclosed control system is based on the indoor mounted sensors or measuring devices, there is no need to mount sensors and other instrumentation outdoor if ventilating device is not used as a humidity decreasing device. Then the sensors may be integrated to the basic structure of the apparatus, or they may be in wired connection with the apparatus. However, wireless indoor sensing devices for producing sensing or measuring data may also be implemented. Then the sensors may be mounted more freely to desired indoor locations.

The same apparatus may control one or more compartments of the same built-up shell and may implement the same or somewhat different control principles and parameters in different compartments. Structures, building materials and intended use of the compartments may be different wherefore the control may also differ. Further, two or more separate built-up shells may have one common apparatus for implementing the disclosed control. In other words, the apparatus is capable of managing several different built-up shells and several compartments of the same built-up shell.

Ventilating device can lower the relative humidity of the indoor air based on two different control principles. If there is no or little heating in the interior and there are envelope or other properties with significant moisture capacity inside, the ventilation control is based on the difference in relative humidity between indoor and outdoor air. If there are no surfaces with significant humidity capacity indoors, the ventilation control is based on the difference in water vapour content between indoor and outdoor air. In both cases, a sensor measuring the outdoor temperature and relative humidity is needed to obtain outdoor data. However, in addition to the outdoor air, the outdoor air sensor can also be located, for example, in a ventilation duct from the outdoor air.

When the water vapour content of the indoor air is higher than that of the outdoor air, the outdoor air is also typically colder than the indoor air. If air is exchanged in an unheated or slightly heated built-up shell in this case, the indoor space will cool at the same time, which tends to increase the relative humidity inside. Materials with a moisture capacity then adsorb moisture from the indoor air, which increases their moisture content. Wetter materials, in turn, keep the relative humidity of the interior space at a higher level. For this reason, it is advisable to start ventilation in this case when the relative humidity of the indoor air is higher than in the outside air and stop when the relative humidity of the indoor air starts to rise.

For example, in summer, the relative humidity in indoor air is at its lowest because the temperature is high. The moisture contents of the materials in contact with the indoor air are also at their lowest. As the outside air temperature starts to drop towards winter, it is not advisable to change the air inside the built-up shell, as dry materials keep the indoor relative humidity at a lower level for longer. However, if ventilation in this case were controlled on the basis of the difference in water vapour content, it would be in operation almost all the time because the water vapour content of the indoor air would be higher than that of outdoor air.

Typically, the control method based on the difference in the relative humidity of the indoor and outdoor air can be used in all kinds of buildings. The control method based on the difference in water vapor content can be used, for example, in caravans, containers and boats.

In this document the microbial growth includes growth of bacteria and mould as well as growth of other microbes. In other words, moulds and bacteria are microbes which may damage indoor surfaces of the built-up shells and surfaces of other objects in indoor space and may also cause health problems.

According to an embodiment, the apparatus is designed for fully or partly non-heated built-up shells intended only for occasional or temporary residency or non-residency. In such built-up shells which are incompletely heated, a greater risk for example to microbial growth and moisture condensation occurs compared to built-up shells having stable and relatively high inner temperature. The built-up shell is a summerhouse, summer cottage, holiday home, hut, barrack, warehouse, shed, mobile home, caravan, container, boat or corresponding building or other covered and closed space intended for occasional or temporary residency or non-residency.

According to an embodiment, the indoor relative humidity limit values RH_{Limit} are based on safety margins defined for at least two critical indoor relative humidity values RH_{CriticalIn} defined for the mentioned at least two damaging phenomena. The safety margins set the indoor relative humidity limit values RH_{Limit} below the critical indoor relative humidity values RH_{CriticalIn} at different indoor temperatures. Purpose of the safety margins is to ensure that indoor conditions does not meet critical relative humidity levels.

According to an embodiment, the above mentioned safety margins are set 1 - 15 % RH below the critical indoor relative humidity values RH_{CriticalIn.}

According to an embodiment, the magnitudes of the above mentioned safety margins are configured to change as a function of indoor temperature. In other words, the safety margins are not fixed. The implemented safety margins may be greater at lower temperatures due to inaccuracy of measurements, for example.

According to an embodiment, the data on indoor relative humidity limit values RH_{Limit} comprise values which are defined on the basis of set safety margins and data on critical indoor relative humidity values RH_{CriticalInMicrobial} defined for conditions being favourable for microbial growth at different indoor temperatures. In other words, adverse indoor conditions in respect to microbial growth are taken into account when controlling level of relative humidity inside the built-up shell.

According to an embodiment, the above mentioned critical indoor relative humidity value RH_{CriticalInMicrobial} is based on a Finnish Mould Growth Model (FMGM) based on scientific studies on mould growth on surfaces of building materials. The model is designed to determine critical relative humidity values at different temperatures where mould growth occurs. The FMGM model takes into account also time, i.e. how long time favourable mould growth conditions may last without causing problems to the surfaces of objects and cause indoor health problems and damages.

According to an embodiment, the data on indoor relative humidity limit values RH_{Limit} comprise values based on the set safety margins and data on critical indoor relative humidity values RH_{CriticalInCondesation} for conditions being favourable for moisture condensation at different indoor temperatures. In other words, adverse indoor conditions in respect to moisture condensation are taken into account when controlling level of relative humidity inside the built-up shell.

According to an embodiment, the data on indoor relative humidity limit values RH_{Limit} comprise values based on the set safety margins and data on critical indoor relative humidity values RH_{CriticalInCorrosion} for conditions being favourable for corrosion at different indoor temperatures. In other words, adverse indoor conditions in respect to iron corrosion, and possibly other corrosions, are taken into account when controlling level of relative humidity inside the built-up shell.

According to an embodiment, the control unit is provided with at least two separate data sets defining dedicated indoor relative humidity limit values RH_{Limit} for at least two of the mentioned damaging phenomena. The control unit detects at each sensed indoor temperature lowest indoor relative humidity limit values RH_{Limit} of the mentioned separate data sets. Further, the control unit controls the humidity decreasing device in accordance with the detected lowest indoor relative humidity limit values RH_{Limit} of one data set. Thus, the control unit can prioritize the control to provide protection against one damaging phenomena over the other damaging phenomena at each sensed indoor temperature. In other words, the disclosed apparatus may monitor indoor relative humidity values at different temperatures and may select which limit values uses in the executed control measures. The dedicated data sets of different damaging phenomena may in practice comprise functions, algorithms or curves, for example.

According to an embodiment, the control unit is provided with at least one common data set defining combined indoor relative humidity limit values RH_{Limit} for two or more damaging phenomena. The common data set may comprise for example a function, algorithm or combination curve where combined limit values are considered and presented. This solution is an alternative to above mentioned solution implementing dedicated data sets.

According to an embodiment, the data on indoor relative humidity limit values RH_{Limit} are input to the control unit. Thus, the apparatus is provided with the limit values which are defined external to the apparatus.

According to an embodiment, the data on indoor relative humidity limit values RH_{Limit} is calculated in the control unit. Therefore, data on two or more different critical indoor relative humidity values RH_{CriticalIn} defined for the two or more damaging phenomena and different safety margins defined for the different critical indoor relative humidity values RH_{CriticalIn} at different indoor temperatures are input to the control unit. The control unit may execute a computer program or algorithm for calculating the limit values.

According to an embodiment, the mentioned humidity decreasing device is a heating device. Then the apparatus controls one or more heating devices for increasing indoor temperature.

According to an embodiment the heating device controlled by means of the disclosed apparatus is an electrical heating device. Alternatively, gas heating, oil heating, pellet heating or any other suitable heating is utilized. However, controlling the electrical heating is simple and accurate. The mentioned other heating systems require control devices for controlling their operation under command of the disclosed apparatus and its control unit.

According to an embodiment, the mentioned humidity decreasing device is a ventilating device. Then the apparatus controls one or more ventilating devices. In this control additional sensing or measuring data from one or more outdoor temperature sensors and one or more outdoor humidity sensors is needed. The control unit compares the sensing data on indoor relative humidity and outdoor relative humidity as well as sensing data on indoor temperature and outdoor temperature. The control unit may determine indoor and outdoor water vapour content based on the data on sensed indoor and outdoor temperatures and relative humidity values. Further, the control unit controls the ventilating device for starting ventilation when the indoor relative humidity is higher than the outdoor relative humidity and stopping it when the indoor relative humidity begins to rise. This adjustment is performed when materials with significant moisture content are in contact with indoor air. In other cases, the ventilating device starting ventilation when the determined indoor water vapour content is higher than the determined outdoor water vapour content.

According to an embodiment, the mentioned humidity decreasing device may include also both a heating device and a ventilating device. The heating device and the ventilating device may be separated devices, or the device may be an integrated device. Then the apparatus controls one or more heating devices and one or more ventilating devices at the same time. Heating and ventilation devices are adjusted according to the above principles. The heating device and the ventilating device may be separated devices, or the device may be an integrated device.

According to an embodiment, the control unit comprises two data sets of indoor relative humidity limit values RH_{Limit}, wherein a first data set define first limit values for conditions being favourable for microbial growth at different indoor temperatures and a second data set define second limit values for conditions being favourable for moisture condensation at different indoor temperatures. The control unit is configured to implement in the control of the humidity decreasing device the mentioned first data set at a first indoor temperature range and the second data set at a second indoor temperature range being below the first temperature range.

According to an embodiment, the lowest value of the above mentioned first temperature range is 0°C or close to it since almost no microbial growth exists when the temperature is below 0°C.

According to an embodiment, control measures of the apparatus implement at least two control modes wherein at least one of the control modes is a condensation mode for mitigating moisture condensation on surfaces in the indoor space. Then the control unit comprises indoor relative humidity limit values RH_{Limit} for conditions being favourable for moisture condensation at different indoor temperatures. The control unit comprises an indoor temperature limit value below which the control unit is configured to automatically prioritize the condensation mode over the at least one other control mode and is thereafter configured to control the humidity decreasing device in accordance with the indoor relative humidity limit values RH_{Limit} defined for the condensation mode. In other words, the disclosed condensation mode is a decisive control mode when the indoor temperature is low, and when the indoor temperature is higher, then one or more other control modes are utilized instead.

According to an embodiment, the above disclosed operation principle may be considered in an opposite way. Then the condensation mode is always on and when operating above the set temperature limit, then the other one, two or even more control modes are utilized since their inner relative humidity limit values RH_{Limit} are at lower lever than the inner relative humidity limit values RH_{Limit} of the condensation mode, whereby they trigger the control measures already at lower relative humidity levels.

According to an embodiment, the apparatus is provided with several preset alternative settings for the mentioned indoor relative humidity limit values thereby allowing selection of increased safety margins relative to the data on critical indoor relative humidity values RH_{CriticalIn} on which the indoor relative humidity limit values are based on. This control feature allows the indoor relative humidity level to be controlled to lower levels depending on moisture damage phenomena. This way, inner surfaces of the envelope, furniture and any other movable properties in the indoor space can be provided with additional protection, if so desired. Thereby, it is possible to mitigate corrosion, swelling, changes in shapes and dimensions of the objects, and further, emissions of volatile organic compounds (VOC).

According to an embodiment, the control unit is configured to override the basic control principle based on the indoor relative humidity limit values for a limited maximum period. The disclosed override may be allowed since the microbial growth takes time whereby short term visits in critical conditions may be acceptable.

According to an embodiment, the above mentioned override may be allowed in order to avoid heating when the energy prize is high.

According to an embodiment, the mentioned override may be allowed in order to balance energy consumption at peak hours in accordance with a contract with an electric company.

According to an embodiment, the basic control principles may be overridden when extra energy is available. Then the apparatus may utilize the extra energy, such as solar or wind energy, and may operate the humidity decreasing device, especially a heating device, even when the operation is not necessarily needed in accordance with the basic control principles to prevent the microbial growth or to prevent moisture condensation inside the indoor space.

According to an embodiment, the apparatus is provided with outdoor sensing data on outdoor temperature and relative humidity for determining outdoor conditions. The control unit is configured to update the control measures at predetermined intervals. And further, the control unit is configured to monitor rate of change in outdoor conditions in response to the received outdoor sensing data and is configured to automatically adjust frequency of the updates of the control in response to the detected rate of change. Thus, when the apparatus notifies that outdoor conditions change rapidly, the apparatus can then react without unnecessary delays. This way, it is possible to decrease problems caused by moisture condensation, for example.

According to an embodiment, the disclosed solution relates to a method of controlling indoor conditions of an incompletely heated built-up shell comprising an inner space limited by an envelope. The method comprises the following steps: sensing indoor temperature; sensing indoor relative humidity; transmitting sensing data to at least one control unit; and controlling by means of the control unit at least one humidity decreasing device for decreasing level of the relative humidity in the indoor space. The method further comprises: defining indoor relative humidity limit values RH_{Limit} for conditions being favourable for causing damages to surface of objects in the indoor space due to at least two of the following damaging phenomena: microbial growth, moisture condensation, corrosion; comparing the sensed indoor relative humidity values to the indoor relative humidity limit values RH_{Limit} at the sensed indoor temperatures; and controlling the humidity decreasing device in response to detected fast approach or exceed of the indoor relative humidity limit values RH_{Limit} in order to decrease the indoor relative humidity.

According to an embodiment, the disclosed solution relates to a computer program product. The computer program product comprises program code means configured to execute the steps and procedures disclosed in this document when being run on a computer or a data processing device.

According to an embodiment, the apparatus and its control unit may communicate with one or more external devices such as computers, smart phones via Internet connection or telecommunication systems, for example. Then it is possible to modify and communicate to the apparatus control status on/off, control parameters, and control set points. In other words, the apparatus may comprise remote control and update features.

The above disclosed embodiments may be combined in order to form suitable solutions having those of the above features that are needed.

### Brief description of the figures

Some embodiments are described in more detail in the accompanying drawings, in which
Figure 1 is a schematic view of a built-up shell, in this case a building provided with an apparatus for controlling indoor humidity,
Figure 2 is a schematic diagram of damage phenomena caused by high level of relative humidity to surfaces in the indoor space,
Figure 3 is a schematic graph illustrating control principles implemented by means of the disclosed apparatus for controlling indoor conditions in order to prevent three types of damage phenomena,
Figure 4 is a schematic graph illustrating control principles implemented by means of the disclosed apparatus when preventing moisture condensation and mould growth, and
Figure 5 is a schematic diagram of some features relating to a control system of the apparatus.

For the sake of clarity, the figures show some embodiments of the disclosed solution in a simplified manner. In the figures, like reference numerals identify like elements.

### Detailed description of some embodiments

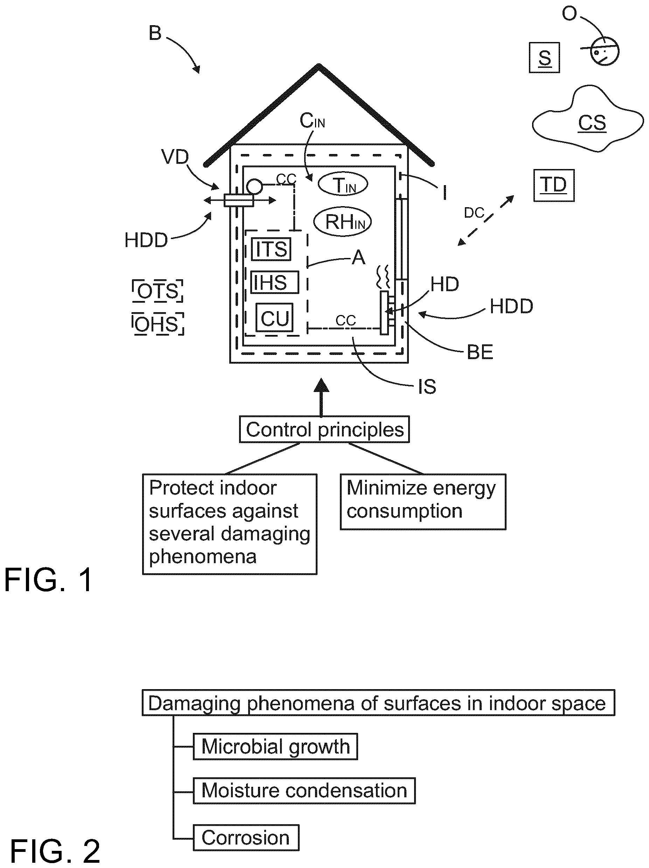

Figure 1 discloses a built-up shell B, in this case a building provided with an inner space IS limited by an envelope BE which may be at least partly insulated I. The inner space IS may be heated by means of one or more heating devices HD in order to increase indoor temperature T_{IN}. The heating device HD may be an electrically operable device, or it may alternatively be any other kind of heating device. The heating device HD may be controlled by means of a control apparatus A. Further, the built-up shell B may or may not be provided with one or more ventilating devices VD for ventilating the indoor space IS. The ventilating device VD may also be controlled by means of the apparatus A. The heating device HD and the ventilating device VD are both humidity decreasing devices HDD by means of which relative humidity level in the indoor space IS can be decreased. The heating device HD and the ventilating device VD can be operated in combination or separately.

The apparatus A monitors indoor conditions C_{IN} and generates control commands CC for controlling the humidity decreasing devices HDD. The apparatus A is provided with one or more indoor temperature sensors ITS or corresponding measuring devices and one or more indoor relative humidity sensors IHS or corresponding measuring devices for determining the indoor conditions C_{IN}. The indoor conditions C_{IN} are determined on the basis of received indoor temperature T_{IN} and relative humidity RH_{IN}. The apparatus A may also receive sensing data from one or more outdoor temperature sensors OTS and outdoor humidity sensors OHS for special control applications. In the disclosed basic control outdoor measuring data is not required. The sensors ITS, IHS (OTS, OHS) may transmit the sensing data to the apparatus A through wired or wireless data communication paths. The apparatus A may be mounted to the built-up shell B, or alternatively, it may be located external to the built-up shell B. Further, the apparatus A may communicate with one or more external electrical devices via data communication connections. Thus, the apparatus A may communicate with one or more servers S, cloud services CS and portable electrical terminal devices TD, such as smart phones. Thus, the apparatus A may implement external computation and data storage features, and further, control parameters and instructions may be adjusted by means of the external electrical devices. The apparatus A may also provide an operator O with information on status, sensing data, mould growth risk, energy consumption and other issues. The built-up shell B is an incompletely heated piece of real estate, which means that the indoor temperature T_{IN} is allowed to decrease below a typical operating level during the cold seasons. The apparatus A is provided with one or more control units CU for generating the control commands. The control unit CU is configured to execute a computer program product in a processor. The program comprises an algorithm for controlling the humidity decreasing device HDD so that set control principles are achieved. In this solution the control system aims to protect surfaces of the structures and other objects in the indoor space IS, not to be damaged due to too high level of relative humidity and by means of two or more damaging phenomena. However, at the same time, the control system aims to minimize energy consumption of the built-up shell.

Figure 2 discloses three adverse phenomenon which may cause serious problems to surfaces and materials in indoor space of the built-up shell. Microbial growth, moisture condensation and corrosion may damage indoor surfaces when indoor condition exceed defined critical levels of relative humidity and temperature. The disclosed apparatus may monitor indoor conditions at defined measuring rate and can control on the basis of the monitoring measures humidity decreasing devices so that indoor conditions remain safe at different temperatures. Thus, two or more damaging phenomena are considered in the control system. Further, the apparatus may also implement one or more additional damaging phenomena and data defined for them in addition to the mentioned three damaging phenomena microbial growth, moisture condensation and corrosion.

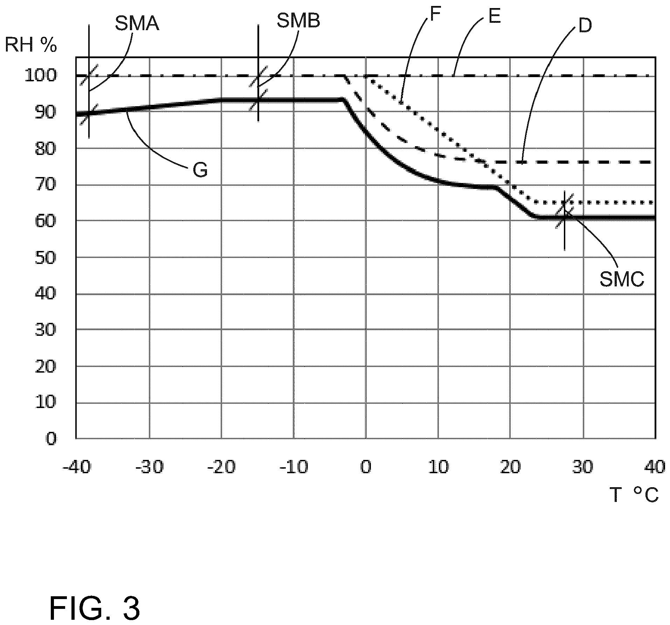

Figure 3 discloses four curves indicating indoor relative humidity (% RH) values as a function of indoor temperature T. In the disclosed arrangement three damaging phenomena are taken into consideration. A first curve D indicates critical relative humidity values defined for microbial growth, a second curve E indicates critical relative humidity values defined for moisture condensation and a third curve F indicates critical relative humidity values for iron corrosion. Figure 3 further discloses a relative humidity limit curve G which defines relative humidity values below the mentioned three curves D, E and F at different temperatures. The disclosed apparatus A may use values of the curve G as limit values in the control measures at different temperatures.

The curve G may be defined by determining at first the most critical damaging phenomena for different temperature ranges and requiring the lowest critical relative humidity values. Then, for example, safety margins SMA, SMB, SMC are defined for the RH values based on scientific studies and empirical data. Magnitude of the safety margins may depend on measuring accuracy of conditions, accuracy of the determined critical RH values and critical conditions prevailing close to thermal bridges of an envelope and other indoor cold surfaces.

In Figure 3 a safety margin SMA is increased at cold temperatures because measuring accuracy of relative humidity decreases. Thus, the safety margin SMA is greater than a safety margin SMB in Figure 3. For iron corrosion phenomena a safety margin SMC may be minor than for the phenomena microbe growth and moisture condensation if critical relative humidity values are defined more accurately and if measuring accuracy of the conditions is accurate.

The control system does not necessarily need to determine the most critical damaging phenomena at a certain order when the indoor temperature changes, as it is shown in Figure 3, but instead one of the damaging phenomena may be critical at high temperatures and at somewhat lower temperatures, and between these temperature conditions there may be another more critical damaging phenomenon.

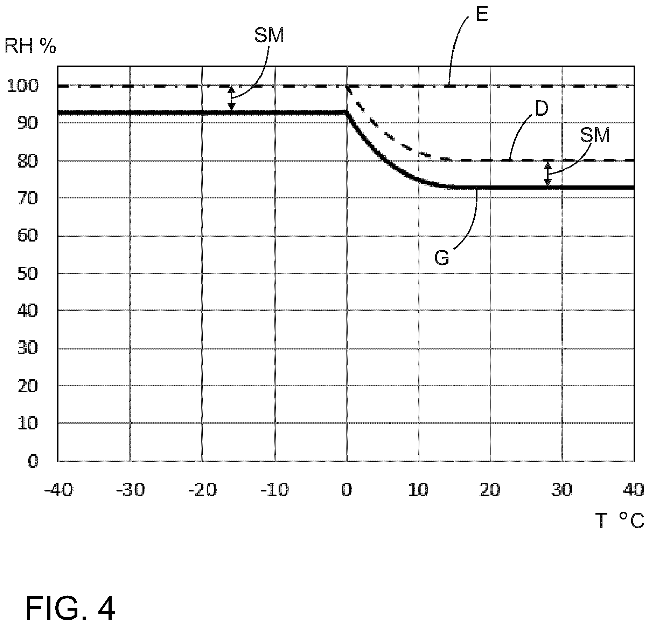

Figure 4 discloses three curves indicating indoor relative humidity values as a function of indoor temperature. In the disclosed arrangement two damaging phenomena are taken into consideration. A first curve D indicates critical relative humidity values defined for microbial growth and a second curve E indicates critical relative humidity values defined for moisture condensation. Figure 4 further discloses a relative humidity limit curve G which defines relative humidity values below the mentioned curves D and E. Safety margins SM define level of the curve G in relation to the curves D and E. The disclosed apparatus A may use values of the curve G as limit values in the control measures at different temperatures.

In Figure 4 the curve D is based on Finnish Mould Growth Model. For the curves D and E a constant safety margin is implemented in this example.

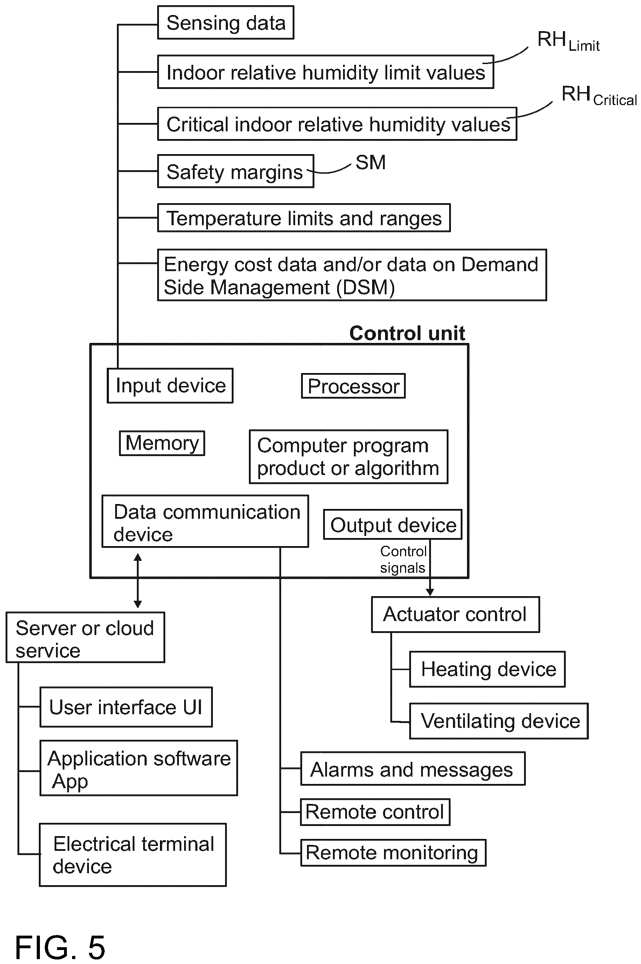

Figure 5 shows basic components of the control system of the disclosed apparatus. By means of an input device sensing data, parameters, limit values, safety margins, temperature settings, and other data and settings may be input for a control unit comprising a processor for executing a software program or algorithm. The control unit may communicate with different external apparatuses in a versatile manner by means of a data communication device. The control unit generates control signals and controls operation of one or more heating devices and/or ventilating devices. The control unit may also produce additional signals such as alarms and messages and may also receive and produce needed remote control data.

The drawings and the related description are only intended to illustrate the idea of the invention. In its details, the invention may vary within the scope of the claims.

## Claims

1. An apparatus (A) for controlling conditions of an incompletely heated built-up shell (B) and comprising an indoor space (IS) limited by an envelope (BE);
wherein the apparatus (A) comprises:
at least one indoor temperature sensor (ITS) for sensing indoor temperature (T_{IN}) in the indoor space (IS);
at least one indoor humidity sensor (IHS) for sensing indoor relative humidity (RH_{IN}) in the indoor space (IS);
at least one control unit (CU) provided with at least processor and a computer program executable in the processor;
and wherein the control unit (CU) is configured to receive sensing data from the mentioned sensors (ITS, IHS) and is configured to generate control commands (CC) for at least one humidity decreasing device (HDD) for decreasing level of the relative humidity inside the indoor space (IS);
**characterized in that**
the control unit (CU) comprises data on indoor relative humidity limit values (RH_{Limit}) which change as a function of the indoor temperature (T_{IN}), and wherein the indoor relative humidity limit values (RH_{Limit}) are defined for conditions being favourable for causing damages to surfaces of objects in the indoor space (IS) due to at least two of the following damaging phenomena: microbial growth, moisture condensation, corrosion;
the control unit (CU) is configured compare the sensed indoor relative humidity values (RH_{IN}) to the indoor relative humidity limit values (RH_{Limit}) at the sensed indoor temperature (T_{IN}), and is configured to operate at least one heating device (HD), which is serving as the mentioned at least one humidity decreasing device (HDD), in response to detected exceed of the indoor relative humidity limit values (RH_{Limit}) in order to decrease the indoor relative humidity (RH_{IN}) by increasing the indoor temperature (T_{IN}) .

2. The apparatus as claimed in claim 1, **characterized in that**
the indoor relative humidity limit values (RH_{Limit}) relay on safety margins defined for data on at least two critical indoor relative humidity values (RH_{CriticalIn}) defined for the mentioned at least two damaging phenomena, and wherein the safety margins (SM) set the indoor relative humidity limit values (RH_{Limit}) below the critical indoor relative humidity values (RH_{CriticalIn}) at different indoor temperatures (T_{IN}) .

3. The apparatus as claimed in claim 2, **characterized in that**
the safety margins (SM) are set 1 - 15 % RH below the critical indoor relative humidity values (RH_{criticalIn}) .

4. The apparatus as claimed in claim 2 or 3, **characterized in that**
the magnitudes of the safety margins (SM) are configured to change as a function of indoor temperature (T_{IN}).

5. The apparatus as claimed in any one of the preceding claims 1 - 4, **characterized in that**
the data on indoor relative humidity limit values (RH_{Limit}) comprise values based on the set safety margins (SM) and data on critical indoor relative humidity values (RH_{criticalInMicrobial}) defined for conditions being favourable for microbial growth at different indoor temperatures (T_{IN}).

6. The apparatus as claimed in any one of the preceding claims 1 - 5, **characterized in that**
the data on indoor relative humidity limit values (RH_{Limit}) comprise values based on the set safety margins (SM) and data on critical indoor relative humidity values (RH_{CriticalInCondesation}) for conditions being favourable for moisture condensation at different indoor temperatures (T_{IN}) .

7. The apparatus as claimed in any one of the preceding claims 1 - 6, **characterized in that**
the data on indoor relative humidity limit values (RH_{Limit}) comprise values based on the set safety margins (SM) and data on critical indoor relative humidity values (RH_{criticalIncorrosion}) for conditions being favourable for corrosion at different indoor temperatures (T_{IN}).

8. The apparatus as claimed in any one of the preceding claims 1 - 7, **characterized in that**
the control unit (CU) is provided with at least two separate data sets defining dedicated indoor relative humidity limit values (RH_{Limit}) for at least two of the mentioned damaging phenomena;
the control unit (CU) is configured detect at each sensed indoor temperature (T_{IN}) lowest indoor relative humidity limit values (RH_{Limit}) of the separate data sets; and
the control unit (CU) is configured to control the humidity decreasing device (HDD) in accordance with the detected lowest indoor relative humidity limit values (RH_{Limit}) of one data set whereby the control unit (CU) is configured to prioritize the control to provide protection against one damaging phenomena over the other damaging phenomena at each sensed indoor temperature (T_{IN}).

9. The apparatus as claimed in any one of the preceding claims 1 - 7, **characterized in that**
the control unit (CU) is provided with at least one common data set defining combined indoor relative humidity limit values (RH_{Limit}) for at least two of the mentioned damaging phenomena.

10. The apparatus as claimed in any one of the preceding claims 1 - 9, **characterized in that**
the apparatus comprises an input device for inputting the data on indoor relative humidity limit values (RH_{Limit}) to the control unit (CU) .

11. The apparatus as claimed in any one of the preceding claims 1 - 9, **characterized in that**
the data on indoor relative humidity limit values (RH_{Limit}) is calculated in the control unit (CU) in response to input data on at least two different critical indoor relative humidity values (RH_{CriticalIn}) defined for the mentioned at least two damaging phenomena, and input different safety margins (SM) defined for the different critical indoor relative humidity values (RH_{CriticalIn}) at different indoor temperatures (T_{IN}).

12. The apparatus as claimed in any one of the preceding claims 1 - 11, **characterized in that**
the apparatus (A) is configured to further control at least one ventilating device (VD), which is serving as an additional humidity decreasing device (HDD);
the apparatus (A) further comprises at least one outdoor temperature sensor (OTS) and at least one outdoor humidity sensor (OHS);
the control unit (CU) is configured to compare sensing data on indoor relative humidity (RH_{IN}) and outdoor relative humidity (RH_{OUT}) as well as sensing data on indoor temperature (T_{IN}) and outdoor temperature (T_{OUT}); and
the control unit (CU) is configured to control the ventilating device (VD) for start ventilating the indoor space (IS) when the indoor relative humidity is higher than the outdoor relative humidity and stop ventilating when the indoor relative humidity begins to rise.

13. A method of controlling indoor conditions (C_{IN}) of an incompletely heated built-up shell (B) comprising an inner space (IS) limited by an envelope (BE),
wherein the method comprises:
sensing indoor temperature (T_{IN});
sensing indoor relative humidity (RH_{IN});
transmitting sensing data to at least one control unit (CU); and
controlling by means of the control unit (CU) at least one humidity decreasing device (HDD) for decreasing level of the relative humidity (RH_{IN}) in the indoor space (IS) ;
characteri zed by
providing the control unit (CU) with indoor relative humidity limit values (RH_{Limit})for conditions being favourable for causing damages to surfaces of objects in the indoor space (IS) due to at least two of the following damaging phenomena: microbial growth, moisture condensation, corrosion;
comparing the sensed indoor relative humidity values (RH_{IN}) to the indoor relative humidity limit values (RH_{Limit}) at the sensed indoor temperatures (T_{IN}) ; and
controlling at least one heating device (HD), which is serving as the humidity decreasing device (HDD), in response to detected exceed of the indoor relative humidity limit values (RH_{Limit}) in order to decrease the indoor relative humidity (RH_{IN}) by heating the inner space (IS) .

14. A computer program product for controlling indoor conditions (C_{IN}) of an incompletely heated built-up shell (B) comprising an inner space (IS) limited by an envelope,
where the computer program product comprises program code means configured to execute the following steps when being run on a computer or a data processing device:
receiving sensed indoor temperature (T_{IN}) and sensed indoor relative humidity data (RH_{IN});
controlling at least one humidity decreasing device (HDD) for decreasing level of the relative humidity (RH_{IN}) in the indoor space (IS);
**characterized in**
comparing the sensed indoor relative humidity values (RH_{IN}) to indoor relative humidity limit values (RH_{Limit}) at the sensed indoor temperatures (T_{In}), where the indoor relative humidity limit values (RH_{Limit}) are defined for conditions being favourable for causing damages to surfaces of objects in the indoor space (IS) due to at least two of the following damaging phenomena: microbial growth, moisture condensation, corrosion; and
controlling at least one heating device (HD), which is serving as the humidity decreasing device (HDD), in response to detected exceed of the indoor relative humidity limit values (RH_{Limit}) in order to decrease the indoor relative humidity (RH_{In}) by heating the inner space (IS) .
